# EUROPEAN PATENT APPLICATION

(11) **EP 4 120 129 A1**
(43) Date of publication of application: **18.01.2023**
(21) Application number: 21768840.7
(22) Date of filing: 02.03.2021
(51) Int. Cl.: G06K 9/03

(54) **RECOGNITION DEVICE AND PROGRAM**

(30) Priority: 09.03.2020 JP 2020039633
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: USAMI, Yusuke, Kawasaki-shi, Kanagawa 212-0013 (JP); ASAHI, Kazutaka, Kawasaki-shi, Kanagawa 212-0013 (JP)
(74) Representative: Horn Kleimann Waitzhofer Patentanwälte PartG mbB
(86) International application number: PCT/JP2021/007968
(87) International publication number: WO 2021/182186

(57) **Abstract**

According to an embodiment, the recognition apparatus includes an image interface, an input interface, and a processor. The image interface is configured to acquire a display screen image from an input device for inputting a character string included in a captured image in which recognition of the character string according to a first algorithm fails. The input interface is configured to input the character string to the input device. The processor is configured to acquire a result of character recognition processing performed on the display screen image according to a second algorithm different from the first algorithm, and input the character string based on the result of the character recognition processing to the input device through the input interface.

## Description

### FIELD

Embodiments described herein relate generally to a recognition apparatus and a program.

### BACKGROUND

There is provided a recognition system including a recognition apparatus that reads a character string such as an address through optical character recognition (OCR) processing and a video coding system (VCS) that receives input of the character string from an operator if the recognition apparatus fails to recognize the character string.

In such a recognition system, it is necessary to modify the recognition apparatus in order to improve the recognition accuracy of the character string.

Under these circumstance, there is a demand for a technique of effectively acquiring a character string without modifying an existing recognition system.

### CITATION LIST

### PATENT LITERATURE

Patent Literature 1: Jpn. Pat. Appln. KOKAI Publication No. 2005-007315

### SUMMARY

### TECHNICAL PROBLEM

To solve the above problem, a recognition apparatus and a program capable of effectively acquiring a character string are provided.

### SOLUTION TO PROBLEM

According to an embodiment, a recognition apparatus includes an image interface, an input interface, and a processor. The image interface is configured to acquire a display screen image from an input device for inputting a character string included in a captured image in which recognition of the character string according to a first algorithm fails, the display screen image being based on at least the captured image displayed on a display screen of the input device. The input interface is configured to input the character string to the input device. The processor is configured to acquire a result of character recognition processing performed on the display screen image according to a second algorithm different from the first algorithm, and input the character string based on the result of the character recognition processing to the input device through the input interface.

### BRIEF DESCRIPTION OF THE DRAWINGS

FIG. 1 is a block diagram showing a configuration example of a recognition system according to an embodiment.
FIG. 2 is a block diagram showing a configuration example of a first recognition apparatus according to the embodiment.
FIG. 3 is a block diagram showing a configuration example of a VCS according to the embodiment.
FIG. 4 is a block diagram showing a configuration example of a second recognition apparatus according to the embodiment.
FIG. 5 is a diagram showing an example of an input screen according to the embodiment.
FIG. 6 is a flowchart illustrating an operation example of the first recognition apparatus according to the embodiment.
FIG. 7 is a flowchart illustrating an operation example of the VCS according to the embodiment.
FIG. 8 is a flowchart illustrating an operation example of the second recognition apparatus according to the embodiment.

### DETAILED DESCRIPTION

Hereinafter, an embodiment will be described with reference to the drawings.

A recognition system according to the embodiment reads a destination such as an address from an article fed to a sorter. The recognition system sets a sorting destination of the article (e.g., a chute of a sorter) based on the read address. If the recognition system fails to read the destination, the recognition system receives input of the destination from an operator who has visually confirmed the destination.

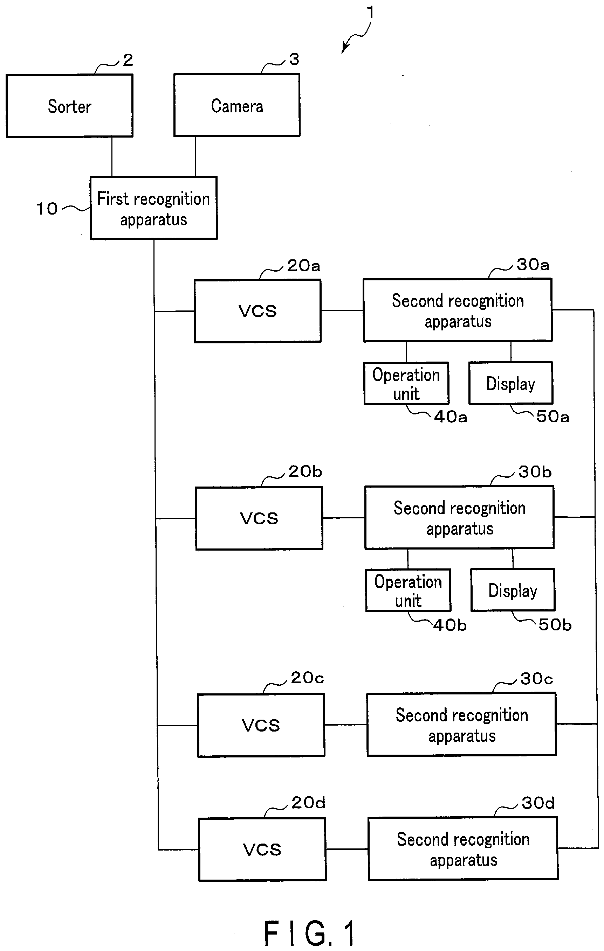

FIG. 1 shows a configuration example of a recognition system 1 according to an embodiment. As shown in FIG. 1, the recognition system 1 includes a sorter 2, a camera 3, a first recognition apparatus 10, VCSs 20 (20a to 20d), second recognition apparatuses 30 (30a to 30d), operation units 40 (40a and 40b), displays 50 (50a and 50b), and the like.

The first recognition apparatus 10 is connected to the sorter 2, the camera 3, and the VCSs 20. The VCSs 20a to 20d are connected to the second recognition apparatuses 30a to 30d, respectively. The second recognition apparatuses 30a and 30b are connected to the operation units 40a and 40b, respectively. The second recognition apparatuses 30a and 30b are also connected to the displays 50a and 50b, respectively.

The recognition system 1 may include further configurations as necessary in addition to the configuration illustrated in FIG. 1, or a specific configuration may be excluded from the recognition system 1.

The sorter 2 sorts fed articles to sorting destinations based on signals from the first recognition apparatus 10. For example, the sorter 2 includes a plurality of chutes as sorting destinations. The sorter 2 feeds an article to a chute based on a signal from the first recognition apparatus 10. For example, the sorter 2 acquires, from the first recognition apparatus 10, sorting information indicating an ID for specifying an article and a sorting destination (such as a chute number) to which the article is to be fed. The sorter 2 feeds an article to a chute based on the sorting information.

The camera 3 captures an image of an article fed to the sorter 2. The camera 3 captures an image of a surface (destination surface) of the article on which a destination of the article is written. For example, the camera 3 is installed on a conveying path along which articles are fed to the sorter 2. The camera 3 may capture images of articles from multiple surfaces thereof. The camera 3 transmits the captured images to the first recognition apparatus 10.

The first recognition apparatus 10 sets a sorting destination of an article in the sorter 2 based on an image (captured image) from the camera 3 or the like. For example, the first recognition apparatus 10 transmits, to the sorter 2, sorting information indicating an ID for identifying an article and a sorting destination to which the article is to be fed. The first recognition apparatus 10 will be detailed later.

The VCSs 20 are input devices for, when the first recognition apparatus 10 fails to recognize the destination, inputting the destination included in the captured image (captured image of the destination surface) in which recognition of the destination has failed. The VCSs 20 will be detailed later.

The second recognition apparatuses 30 recognize a destination from the captured image acquired by the VCSs 20 through OCR processing (character recognition processing). The second recognition apparatuses 30 input the recognized destination to the VCSs 20. The second recognition apparatuses 30 will be detailed later.

The operation units 40 receive input of various operations from an operator. The operation units 40 transmit signals indicating the input operations to the second recognition apparatuses 30. The operation units 40 are each constituted by a keyboard, buttons, a touch panel, or the like.

The displays 50 display information based on control from the second recognition apparatuses 30. For example, the displays 50 are constituted by a liquid crystal monitor. If the operation units 40 are constituted by a touch panel, the displays 50 are constituted by a liquid crystal monitor formed integrally with the operation units 40.

The recognition system 1 may include an operation unit and a display that are connected to the second recognition apparatuses 30c and 30d, respectively.

Next, the first recognition apparatus 10 will be described.

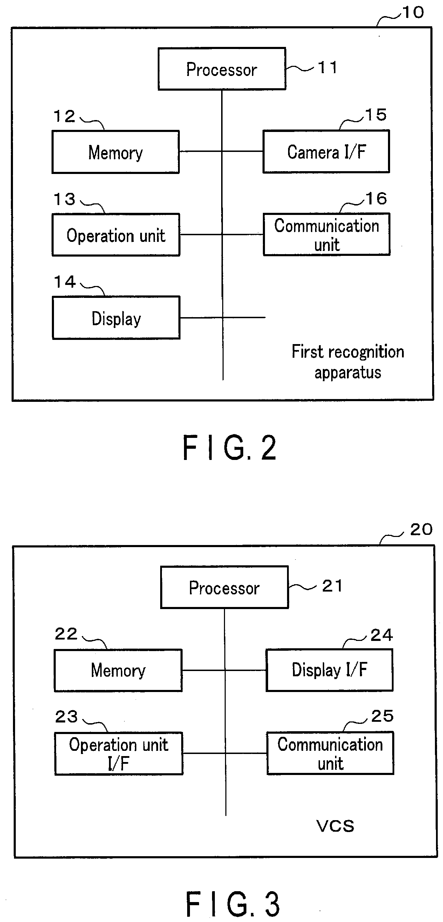

FIG. 2 shows a configuration example of the first recognition apparatus 10. As illustrated in FIG. 2, the first recognition apparatus 10 includes a processor 11, a memory 12, an operation unit 13, a display 14, a camera interface 15, a communication unit 16, and the like. The processor 11 is communicably connected to the memory 12, the operation unit 13, the display 14, the camera interface 15, and the communication unit 16 via a data bus, a predetermined interface, or the like.

The first recognition apparatus 10 may include further configurations as necessary in addition to the configuration illustrated in FIG. 2, or a specific configuration may be excluded from the first recognition apparatus 10.

The processor 11 controls the overall operation of the first recognition apparatus 10. For example, the processor 11 generates sorting information based on the recognition result of the destination and transmits the sorting information to the sorter 2.

For example, the processor 11 is constituted by a CPU or the like. The processor 11 may also be constituted by an application specific integrated circuit (ASIC) or the like. The processor 11 may also be constituted by a field programmable gate array (FPGA) or the like.

The memory 12 stores various data. For example, the memory 12 functions as a ROM, a RAM, and an NVM.

For example, the memory 12 stores a control program, control data, and the like. The control program and the control data are incorporated in advance according to the specifications of the first recognition apparatus 10. For example, the control program is a program that supports the functions implemented by the first recognition apparatus 10.

The memory 12 temporarily stores data being processed by the processor 11, and the like. The memory 12 may also store data necessary for executing an application program, a result of executing the application program, and the like.

The operation unit 13 receives input of various operations from an operator. The operation unit 13 transmits a signal indicating an input operation to the processor 11. The operation unit 13 is constituted by a keyboard, buttons, a touch panel, or the like.

The display 14 displays information based on control from the processor 11. For example, the display 14 is constituted by a liquid crystal monitor. If the operation unit 13 is constituted by a touch panel, the display 14 is constituted by a liquid crystal monitor formed integrally with the operation unit 13.

The camera interface 15 is an interface for transmitting and receiving data to and from the camera 3. For example, the camera interface 15 is connected to the camera 3 by wire. The camera interface 15 receives a captured image from the camera 3. The camera interface 15 transmits the received captured image to the processor 11. The camera interface 15 may supply power to the camera 3.

The communication unit 16 is an interface for transmitting and receiving data to and from the sorter 2 and the VCSs 20. For example, the communication unit 16 supports a local area network (LAN) connection. For example, the communication unit 16 may support a universal serial bus (USB) connection. The communication unit 16 may be constituted by an interface for transmitting and receiving data to and from the first recognition apparatus 10 and an interface for transmitting and receiving data to and from the VCSs 20.

Next, the VCSs 20 will be described.

Since the VCSs 20a to 20d have the same configuration, they will be described as "VCS 20".

FIG. 3 shows a configuration example of the VCS 20. As shown in FIG. 3, the VCS 20 includes a processor 21, a memory 22, an operation unit interface 23, a display interface 24, a communication unit 25, and the like. The processor 21 is communicably connected to the memory 22, the operation unit interface 23, the display interface 24, and the communication unit 25 via a data bus, a predetermined interface, or the like.

The VCS 20 may include further configurations as necessary in addition to the configuration illustrated in FIG. 3, or a specific configuration may be excluded from the VCS 20.

The processor 21 controls the overall operation of the VCS 20. For example, the processor 21 outputs, through the display interface 24, a captured image in which recognition of a destination fails.

For example, the processor 21 is constituted by a CPU or the like. The processor 21 may also be constituted by an ASIC or the like. The processor 21 may also be constituted by a FPGA or the like.

The memory 22 stores various data. For example, the memory 22 functions as a ROM, a RAM, and an NVM.

For example, the memory 22 stores a control program, control data, and the like. The control program and the control data are incorporated in advance according to the specifications of the VCS 20. For example, the control program is a program that supports the functions implemented by the VCS 20.

The memory 22 temporarily stores data being processed by the processor 21, and the like. The memory 22 may also store data necessary for executing an application program, a result of executing the application program, and the like.

The operation unit interface 23 is an interface for transmitting and receiving data to and from an input device that receives input of an operation. For example, the operation unit interface 23 receives, from the input device, an operation signal indicating an operation (key input operation) input to the keyboard. The operation unit interface 23 transmits the received operation signal to the processor 21. The operation unit interface 23 may supply power to the input device. For example, the operation unit interface 23 supports a USB connection.

The display interface 24 is an interface for transmitting and receiving data to and from a display device that displays an image. The display interface 24 outputs, to the display device, image data from the processor 21.

The communication unit 25 is an interface for transmitting and receiving data to and from the first recognition apparatus 10 and the second recognition apparatuses 30. For example, the communication unit 25 supports a LAN connection. For example, the communication unit 25 may support a USB connection. The communication unit 25 may be constituted by an interface for transmitting and receiving data to and from the first recognition apparatus 10 and an interface for transmitting and receiving data to and from the second recognition apparatuses 30.

Next, the second recognition apparatuses 30 will be described.

Since the second recognition apparatuses 30a to 30d have the same configuration, they will be described as "second recognition apparatus 30".

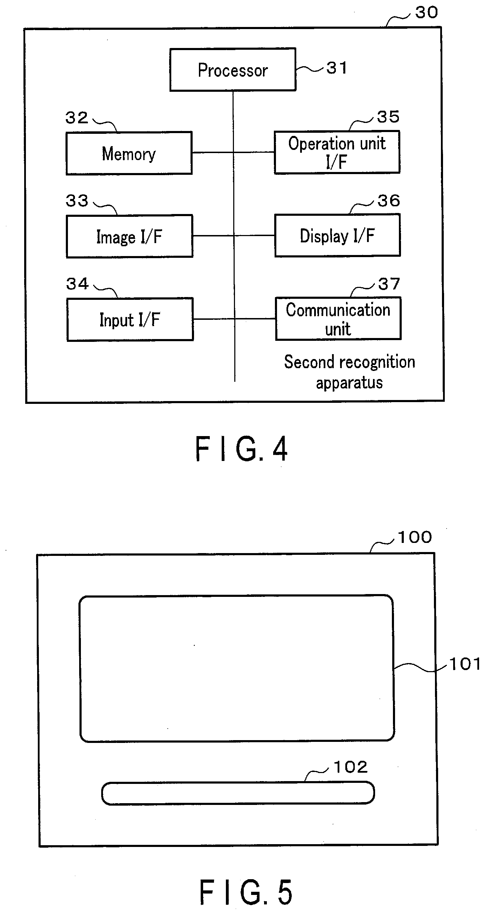

FIG. 4 shows a configuration example of the second recognition apparatus 30. As shown in FIG. 4, the second recognition apparatus 30 includes a processor 31, a memory 32, an image interface 33, an input interface 34, an operation unit interface 35, a display interface 36, a communication unit 37, and the like. The processor 31 is communicably connected to the memory 32, the image interface 33, the input interface 34, the operation unit interface 35, the display interface 36, and the communication unit 37 via a data bus, a predetermined interface, or the like.

The second recognition apparatus 30 may include further configurations as necessary in addition to the configuration illustrated in FIG. 4, or a specific configuration may be excluded from the second recognition apparatus 30.

The processor 31 controls the overall operation of the second recognition apparatus 30. For example, the processor 31 acquires a destination from a captured image through OCR processing.

For example, the processor 31 is constituted by a CPU or the like. The processor 31 may also be constituted by an ASIC or the like. The processor 31 may also be constituted by an FPGA or the like.

The memory 32 stores various data. For example, the memory 32 functions as a ROM, a RAM, and an NVM.

For example, the memory 32 stores a control program, control data, and the like. The control program and the control data are incorporated in advance according to the specifications of the second recognition apparatus 30. For example, the control program is a program that supports the functions implemented by the second recognition apparatus 30.

The memory 32 temporarily stores data being processed by the processor 31, and the like. The memory 32 may also store data necessary for executing an application program, a result of executing the application program, and the like.

The image interface 33 is connected to the display interface 24 of the VCS 20. The image interface 33 acquires an image from the display interface 24. Specifically, the image interface 33 acquires an image to be displayed on the display device by the processor 21 of the VCS 20. The image interface 33 transmits the acquired image to the processor 31. For example, the image interface 33 is constituted by a capture board or the like.

The input interface 34 is connected to the operation unit interface 23. The input interface 34 inputs an operation signal indicating a key input operation to the operation unit interface 23 under the control of the processor 31. For example, the input interface 34 supports a USB connection.

The operation unit interface 35 is an interface for transmitting and receiving data to and from the operation unit 40. For example, the operation unit interface 35 receives, from the operation unit 40, an operation signal indicating an operation input to the operation unit 40. The operation unit interface 35 transmits the received operation signal to the processor 31. The operation unit interface 35 may supply power to the operation unit 40. For example, the operation unit interface 35 supports a USB connection.

The display interface 36 is an interface for transmitting and receiving data to and from the display 50. The display interface 36 outputs, to the display 50, image data from the processor 31.

The communication unit 37 is an interface for transmitting and receiving data to and from the VCS 20 and another second recognition apparatus 30. For example, the communication unit 37 supports a LAN connection. For example, the communication unit 37 may support a USB connection. The communication unit 37 may be constituted by an interface for transmitting and receiving data to and from the VCS 20 and an interface for transmitting and receiving data to and from another second recognition apparatus 30.

The second recognition apparatuses 30c and 30d may not include the operation unit interface 35 and the display interface 36.

Next, the functions implemented by the first recognition apparatus 10 will be described. The functions implemented by the first recognition apparatus 10 are implemented by the processor 11 executing a program stored in the memory 12 or the like.

First, the processor 11 functions to acquire a captured image including a destination surface from the camera 3.

The camera 3 captures an image at a timing when an article passes through an imaging region of the camera 3. The camera 3 transmits the captured image to the first recognition apparatus 10.

The processor 11 acquires the captured image including the destination surface from the camera 3 through the camera interface 15. The processor 11 may transmit a request to the camera 3 and receive a response including the captured image.

The processor 11 also functions to acquire a destination from the captured image through OCR processing.

Upon acquiring the captured image, the processor 11 performs OCR processing on the captured image in accordance with a predetermined algorithm (first algorithm). Upon performing the OCR processing, the processor 11 acquires the destination written on the destination surface of the article based on the result of the OCR processing.

The processor 11 also functions to acquire a destination using the VCS 20 if it fails in the OCR processing.

If the processor 11 fails in the OCR processing and cannot acquire a destination, it transmits the captured image to the VCS 20 through the communication unit 16. The processor 11 selects one VCS 20 from the VCSs 20a to 20d, and transmits the captured image to the selected VCS 20.

As will be described later, the VCS 20 transmits the destination written on the destination surface included in the captured image to the first recognition apparatus 10.

The processor 11 acquires the destination from the VCS 20 through the communication unit 16.

The processor 11 functions to set a sorting destination of an article based on the destination acquired by the OCR processing or the destination from the VCS 20.

For example, the processor 11 sets the number of a chute into which an article is fed in the sorter 2 as a sorting destination based on the destination. For example, the processor 11 sets the number of a chute corresponding to an administrative district (prefecture, city, town, village, or the like) of the destination.

The processor 11 transmits sorting information indicating the ID for identifying the article and the sorting destination of the article to the sorter 2 through the communication unit 16.

Next, the functions implemented by the VCS 20 will be described. The functions implemented by the VCS 20 are implemented by the processor 21 executing a program stored in the memory 22 or the like.

First, the processor 21 functions to acquire a captured image including the destination surface from the first recognition apparatus 10.

As described above, if the processor 11 of the first recognition apparatus 10 fails in the OCR processing, it transmits the captured image to the VCS 20.

The processor 21 of the VCS 20 acquires the captured image from the first recognition apparatus 10 through the communication unit 25.

The processor 21 also functions to transmit the acquired captured image to the second recognition apparatus 30.

Upon acquiring the captured image, the processor 21 generates an input screen (display screen) for receiving input of the destination shown in the captured image. The input screen includes the acquired captured image.

FIG. 5 shows an example of an input screen 100 generated by the processor 21. As shown in FIG. 5, the input screen 100 includes an image region 101, an entry field 102, and the like.

The image region 101 displays the captured image (a display screen image based on the captured image) acquired from the first recognition apparatus 10. The image region 101 displays the captured image including the destination surface.

The entry field 102 is formed below the image region 101. The entry field 102 receives input of the destination written on the destination surface shown in the captured image displayed by the image region 101.

The input screen 100 may also include an icon or the like for fixing the input to the entry field 102.

The entry field 102 may be formed above the image region 101.

The image resolution of the character string included in the captured image displayed by the image region 101 may be lower than the image resolution of the character string included in the image captured by the camera 3.

The configuration of the input screen is not limited to a specific configuration.

Upon generating the input screen, the processor 21 outputs the generated input screen through the display interface 24. The processor 21 outputs the input screen in the same manner as when the display device is connected to the display interface 24. Namely, the processor 21 outputs the same signal as the signal output to a display device such as a display through the display interface 24.

The processor 21 also functions to receive input of a destination through the operation unit interface 23.

Upon outputting the input screen, the processor 21 receives input of a destination through the operation unit interface 23. The processor 21 acquires the same signal (operation signal indicating a key input operation) as a signal acquired when an operation unit is connected to the operation unit interface 23.

The processor 21 also functions to transmit the received input destination (information indicating the destination) to the first recognition apparatus 10.

Upon receiving an operation signal indicating that the input is fixed (e.g., an operation signal indicating that an enter key is pressed) through the operation unit interface 23, the processor 21 transmits the input destination to the first recognition apparatus 10 through the communication unit 25.

Next, the functions implemented by the second recognition apparatus 30 will be described. The functions implemented by the second recognition apparatus 30 are implemented by the processor 31 executing a program stored in the memory 32 or the like.

First, the processor 31 functions to acquire an input screen from the VCS 20.

The processor 31 acquires an input screen through the image interface 33 connected to the display interface 24 of the VCS 20. Namely, the processor 31 acquires the captured image including the destination surface from the VCS 20.

The processor 31 also functions to acquire a destination from the input screen through OCR processing.

Upon acquiring the input screen, the processor 31 extracts an image region from the input screen in accordance with a format acquired in advance, or the like. Namely, the processor 31 extracts the captured image including the destination surface from the input screen.

Upon extracting the captured image, the processor 31 performs OCR processing on the captured image according to a predetermined algorithm (second algorithm) different from the first algorithm. The second algorithm can recognize at least a portion of the character image that the first algorithm cannot recognize.

Upon performing the OCR processing, the processor 31 acquires the destination written on the destination surface of the article based on the result of the OCR processing.

The processor 31 may perform predetermined processing on the input screen or the captured image before performing OCR processing. For example, the processor 31 may enlarge or reduce the size of the input screen or the captured image. The processor 31 may also perform, for example, processing of removing noise on the input screen or the captured image.

The processor 31 functions to input the destination acquired by OCR processing to the operation unit interface 23 of the VCS 20.

Upon acquiring the destination through OCR processing, the processor 31 inputs the destination to the operation unit interface 23 through the input interface 34. Namely, the processor 31 inputs an operation signal indicating a key input operation of inputting a destination to the operation unit interface 23.

The processor 31 may input an operation signal indicating an operation of completing input of the destination to the operation unit interface 23.

The processor 31 also functions to input an operation signal indicating the operation input to the operation unit 40 to the operation unit interface 23 if the OCR processing fails.

If the OCR processing fails, the processor 31 displays the input screen from the VCS 20 on the display 50. Upon displaying the input screen on the display 50, the processor 31 receives input to the operation unit 40. Upon receiving the input to the operation unit 40, the processor 31 inputs an operation signal indicating the input operation to the operation unit interface 23.

The processor 31 may update the input screen on the display 50. Namely, the processor 31 acquires the input screen from the display interface 24 in real time and displays the input screen on the display 50.

The operator visually observes the image region of the input screen displayed on the display 50 and inputs the destination to the operation unit 40. Upon completing the input of the destination, the operator inputs an operation of completing the input to the operation unit 40.

If the operation unit 40 and the display 50 are not connected to the second recognition apparatus 30, the processor 31 displays the input screen on the display 50 connected to another second recognition apparatus 30. The processor 31 also inputs an operation signal indicating the operation input to the operation unit 40 connected to said another second recognition apparatus 30 to the operation unit interface 23 of the VCS 20.

For example, the main second recognition apparatus 30 (e.g., the second recognition apparatus 30a) or an external control device may manage the operation unit 40 used for input and the display 50 that displays the input screen.

Next, an operation example of the first recognition apparatus 10 will be described.

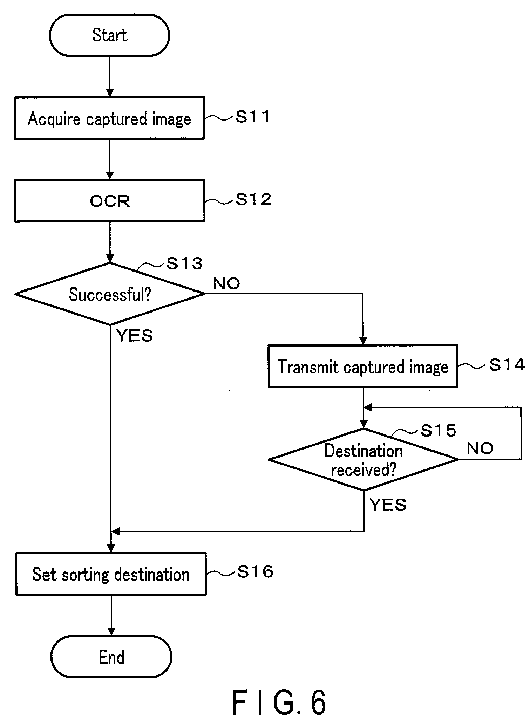

FIG. 6 is a flowchart for explaining an operation example of the first recognition apparatus 10.

First, the processor 11 of the first recognition apparatus 10 acquires a captured image including a destination surface of an article through the camera interface 15 (S11). Upon acquiring the captured image, the processor 11 performs OCR processing on the captured image in accordance with the first algorithm (S12).

If the processor 11 fails to acquire the destination through OCR processing (S13, NO), it transmits the captured image to the VCS 20 through the communication unit 16 (S14). Upon transmitting the captured image to the VCS 20, the processor 11 determines whether or not the destination is received from the VCS 20 through the communication unit 16 (S15).

If the processor 11 determines that the destination is not received from the VCS 20 (S15, NO), it returns to S15.

If the processor 11 successfully acquires the destination through OCR processing (S13, YES), or if the processor 11 determines that the destination is received from the VCS 20 (S15, YES), it sets a sorting destination of the article in the sorter 2 based on the destination acquired by the OCR processing or the destination received from the VCS 20 (S16).

Upon setting the sorting destination of the article in the sorter 2, the processor 11 ends the operation.

Next, an operation example of the VCS 20 will be described.

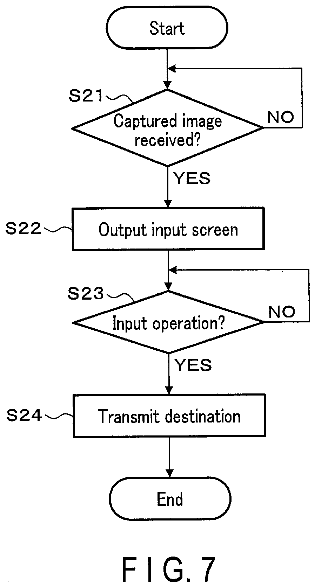

FIG. 7 is a flowchart for explaining an operation example of the VCS 20.

First, the processor 11 of the VCS 20 determines whether or not the captured image is received from the first recognition apparatus 10 through the communication unit 25 (S21). If the processor 11 determines that the captured image is not received from the first recognition apparatus 10 (S21, NO), it returns to S21.

If the processor 21 determines that the captured image is received from the first recognition apparatus 10 (S21, YES), it outputs an input screen including the captured image through the display interface 24 (S22).

Upon outputting the input screen, the processor 21 determines whether or not input of the destination is received through the operation unit interface 23 (S23). If the processor 21 determines that input of the destination is not received (S23, NO), it returns to S23.

If the processor 21 determines that input of the destination is received (S23, YES), it transmits the input destination to the first recognition apparatus 10 through the communication unit 25 (S24). Upon transmitting the input destination to the first recognition apparatus 10, the processor 21 ends the operation.

Next, an operation example of the second recognition apparatus 30 will be described.

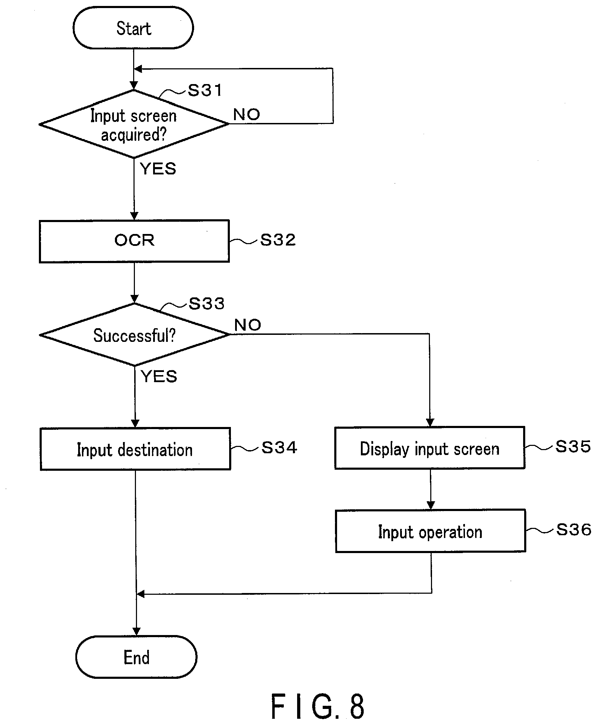

FIG. 8 is a flowchart for explaining an operation example of the second recognition apparatus 30.

The processor 31 of the second recognition apparatus 30 determines whether or not the input screen is acquired through the image interface 33 (S31). If the processor 31 determines that the input screen is not acquired (S31, NO), it returns to S31.

If the processor 31 determines that the input screen is acquired (S31, YES), it performs OCR processing on the captured image of the input screen in accordance with the second algorithm (S32).

If the processor 31 successfully acquires the destination through OCR processing (S33, YES), it inputs an operation signal indicating a key input operation for inputting the destination acquired by the OCR processing to the operation unit interface 23 of the VCS 20 through the input interface 34 (S34).

If the processor 31 fails to acquire the destination through OCR processing (S33, NO), it displays the input screen on the display 50 (S35). Upon displaying the input screen, the processor 31 inputs an operation signal indicating the operation input to the operation unit 40 to the operation unit interface 23 of the VCS 20 (S36). The processor 31 performs S36 until input of the operation for which input has been completed is received.

If the operation signal indicating the key input operation for inputting the destination is input to the operation unit interface 23 (S34) or if the operation signal indicating the operation input to the operation unit 40 is input to the operation unit interface 23 (S36), the processor 31 ends the operation.

The second recognition apparatus 30 may be connected to a plurality of operation units and displays.

The second recognition apparatus 30 may also be integrally formed with the operation unit and the display.

The OCR processing according to the second algorithm may be executed by an external device. For example, the OCR processing according to the second algorithm is executed by cloud computing. In this case, the processor 31 of the second recognition apparatus 30 transmits the captured image to the external device. The processor 31 acquires a result of the OCR processing from the external device.

The first recognition apparatus 10 may be integrally formed with the VCS 20. The first recognition apparatus 10 may be integrally formed with the camera 3. The first recognition apparatus 10 may be integrally formed with the sorter 2.

The VCS 20 may include an operation unit and a display.

The recognition system 1 may recognize a character string other than a destination of an article. The character string recognized by the recognition system 1 is not limited to a specific configuration.

The recognition system configured as described above acquires, from the VCS, the captured image in which the first recognition apparatus fails to recognize the destination. The recognition system performs OCR processing on the acquired captured image in accordance with an algorithm different from the algorithm of the first recognition apparatus. The recognition system inputs a destination based on the result of the OCR processing to the VCS. As a result, the recognition system can effectively acquire the destination without modifying the first recognition apparatus.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A recognition apparatus, comprising:
an image interface configured to acquire a display screen image from an input device for inputting a character string included in a captured image in which recognition of the character string according to a first algorithm fails, the display screen image being based on at least the captured image displayed on a display screen of the input device;
an input interface configured to input the character string to the input device; and
a processor configured to:
acquire a result of character recognition processing performed on the display screen image according to a second algorithm different from the first algorithm; and
input the character string based on the result of the character recognition processing to the input device through the input interface.

2. The recognition apparatus according to claim 1, wherein the processor is configured to perform the character recognition processing on the display screen image according to the second algorithm.

3. The recognition apparatus according to claim 1 or 2, wherein the processor is configured to input an operation signal indicating a key input operation for inputting the character string based on the result of the character recognition processing through the input interface.

4. The recognition apparatus according to any one of claims 1 to 3, comprising:
an operation unit interface connected to an operation unit; and
a display interface connected to a display,
wherein if the processor fails in the character recognition processing according to the second algorithm, the processor displays the display screen on the display through the display interface and inputs to the input device through the input interface an operation signal indicating an operation input to the operation unit.

5. The recognition apparatus according to any one of claims 1 to 4, wherein
the captured image is an image obtained by capturing an image of a surface of an article on which a destination is written, and
the processor is configured to input the destination as the character string through the input interface.

6. A program executed by a processor and causing the processor to implement functions of:
acquiring a display screen image from an input device for inputting a character string included in a captured image in which recognition of the character string according to a first algorithm fails, the display screen image being based on at least the captured image displayed on a display screen of the input device;
acquiring a result of character recognition processing performed on the display screen image according to a second algorithm different from the first algorithm; and
inputting the character string based on the result of the character recognition processing to the input device.
